# EUROPÄISCHE PATENTSCHRIFT

(11) **EP 0 748 271 B1**
(45) Veröffentlichungstag und Bekanntmachung des Hinweises auf die Patenterteilung: **06.10.1999**
(21) Anmeldenummer: 95924857.6
(22) Anmeldetag: 10.07.1995
(51) Int. Cl.: B29B 17/00, C08J 11/10

(54) **VERFAHREN ZUR REAKTIVIERUNG VON ALTGUMMITEILCHEN ODER ZERKLEINERTEN GUMMIABFÄLLEN**
METHOD OF REACTIVATING USED RUBBER PARTICLES OR SHREDDED RUBBER WASTE
PROCEDE DE REACTIVATION DE PARTICULES DE CAOUTCHOUC USAGE OU DE DECHETS DE CAOUTCHOUC BROYES

(30) Priorität: 15.07.1994 DE 4425049
(43) Veröffentlichungstag der Anmeldung: 18.12.1996
(73) Patentinhaber: FARU Forschungsstelle für Analytik, Recycling und Umwelttechnologie GmbH, 01127 Dresden (DE)
(72) Erfinder: BINH, Vo van, 01239 Dresden (DE); HAGEMANN, Peter, 01109 Dresden (DE); ECKART, Wolfgang, 01847 Lohmen (DE); MORGENSTERN, Ute, 01069 Dresden (DE); STRAUBE, Holger, 01689 Weinböhla (DE); FRANCUSKIEWICZ, Frieder, 01309 Dresden (DE)
(74) Vertreter: Hofmann, Klaus
(86) Internationale Anmeldenummer: DE9500922
(87) Internationale Veröffentlichungsnummer: WO9602372

(56) Entgegenhaltungen:
- DR. SIGFRIED BOSTRÖM, (UND DR. HERBERT GÜNTHER) 'KAUTSCHUK-HANDBUCH' 1960 , BERLINER UNION GMBH , STUTTGART, DE. (BAND 2, KAPITEL 1.18, "REGENERAT", DR. HERBERT GÜNTHER) siehe Seite 88, Zeile 13 - Seite 89, Zeile 3 siehe Seite 90, rechte Spalte, Zeile 43 - Seite 91, Zeile 48 siehe Seite 99, Zeile 4 - Seite 100, Zeile 13 siehe Seite 101, Zeile 46 - Seite 103, Zeile 6 siehe Seite 106, Zeile 14 - Seite 107, Zeile 13
- DATABASE WPI Section Ch, Week 8617, Derwent Publications Ltd., London, GB; Class AC, AN 86-112073 C17! & SU,A,1 183 381 (RUBBER LATEX RES. UND MOSC. VULCAN WKS.) 7. Oktober 1985
- DATABASE WPI Section Ch, Week 9407, Derwent Publications Ltd., London, GB; Class AEC, AN 94-049519 C07! & CN,A,1 071 116 (LI G.) 21. April 1993
- INTERNATIONAL POLYMER SCIENCE AND TECHNOLOGY, Bd.13, Nr.7, 1986, SHAWBURY, SHREWSBURY, GB. Seiten 15 - 20 L.A. NOVIKOVA, V.I. MIRONOVA, UND I.V. KRISHTAL 'PROCESSING AND USE OF RUBBER SCRAP IN THE INDUSTRIAL RUBBER PRODUCTS INDUSTRY'

## Beschreibung

Die Erfindung betrifft ein Verfahren zur Reaktivierung von zerkleinertem Altgummi oder zerkleinerten Gummiabfällen zum Zwecke der Erhöhung des Vulkanisationsvermögens und damit einer Verbesserung der Eigenschaften der daraus hergestellten Erzeugnisse.

Die Versuche, Altgummi aus gebrauchten Gummiprodukten, wie z. B. Altreifen, Gummiteile im Fahrzeugbau, technische Gummiartikel usw., und Gummiabfälle aus der Gummiindustrie zu entsorgen und zu verwerten, gehen bis auf den Beginn dieses Industriezweiges zurück. Weltweit werden neue Konzepte für die ökologisch und ökonomisch sinnvolle Verwertung und Entsorgung von Altgummi und Gummiabfällen gesucht. Der werkstofflichen Verwertung kommt dabei zunehmende Bedeutung zu.

Eine bekannte Methode innerhalb der werkstofflichen Verwertung ist die mechanische Zerkleinerung des Altgummis, insbesondere Altreifen, zu Mehl bzw. Granulat. Als eine Möglichkeit wird im 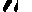 Kautschuk-Handbuch" (Dr. Siegfried Boström, 1960, Berliner Union GmbH, Stuttgart, Band 2, Kapitel 1.18) im Kapitel 1.18.3.1.3 auf die Zerkleinerung von Gummi durch Schneidwalzen mit hoher Friktion zu Granulat von etwa 6-10 mm verwiesen. In DE OS 4213608 Al wird z.B. ein Verfahren und eine Vorrichtung zum Zerkleinern von Gummibrocken beschrieben, bei dem in den Spalt zwischen zwei ineinander exzentrisch gelagerten Walzen mit ungleicher Umfangsgeschwindigkeit und/oder Drehrichtung das Ausgangsmaterial zerquetscht und zerrieben wird.

Bei den Versuchen, das dadurch gewonnene Mahlgut qualitativ zu verbessern und kostengünstig anzuwenden, ergeben sich erhebliche Probleme.

Der zerkleinerte und weiterverarbeitete Altgummi kommt vor allem im Bauwesen zum Einsatz. So werden aus ihm, allerdings oftmals unter Verwendung eines Bindemittels, meistens auf PUR-Basis, Produkte, wie Platten, Beläge und Formteile gefertigt, die z. B. beim Straßen- und Wegebau, bei der Spielplatzgestaltung, als Sportbeläge, als Wand-, Boden- und Deckenelemente zum Einsatz kommen. Desweiteren wird der zerkleinerte Altgummi als Füllstoff, z. B. in Bitumen, Beton und Plastbeton, verwendet.

Zerkleinerter Altgummi und Gummiabfälle werden bisher nur in begrenztem Umfang bei der Herstellung von Gummiartikeln durch Vulkanisation eingesetzt, weil dieses bereits vulkanisierte Material nur noch begrenzt miteinander vernetzt werden kann und sich bei dessen Zugabe zu Frischkautschuk-mischungen in größeren Anteilen das Eigenschaftsniveau der Erzeugnisse im allgemeinen verschlechtert. Man versucht deshalb, diesen Sekundärrohstoff auf verschiedene Art zu behandeln.

Das von der Firma Vredestein entwickelte Produkt Surcrum® stellt eine interessante Modifizierung herkömmlichen Gummimehls dar, wobei letzteres mit einer wäßrigen Dispersion eines hochmolekularen, ungesättigten Polymers, die auch das Vulkanisationssystem enthält, umhüllt wird. Dieses oberflächenmodifizierte Gummipulver wird bei der Vulkanisation fest in das dreidimensionale Netzwerk eingebunden.

Die Firma Hüls AG hat mit Erfolg versucht, trans-Polyoctenamer (Vestenamer®) als vernetzungsfähiges Bindemittel bzw. als Oberflächenmodifikator für zerkleinerten Altgummi einzusetzen, indem Gummimehl oder -granulat unter ständigem Rühren ein übliches Vulkanisationssystem und ein Vestenamer-Öl-Gemisch zugesetzt wird. Das so gecoatete Material bleibt rieselfähig und kann in üblicher Weise vulkanisiert werden.

Beide o.g. Verfahren benötigen zusätzliche Kautschukchemikalien und -hilfsstoffe und zusätzliche technologische Schritte für das Coating des Materials einschließlich der dafür notwendigen Technik. Überdies kann nur feineres Gummimehl Verwendung finden.

Darüberhinaus konnten die schlechteren mechanischen Eigenschaften von Produkten, die Gummimehl enthalten, durch
- Einarbeiten einer Vulkanisationsmischung,
- Einarbeiten von Frischkautschuk mit den üblichen Füllstoffen, Vulkanisations- und Alterungsschutzmitteln,
- Anquellen der Oberfläche der Gummipartikel mit Weichmacher
- Verarbeiten mit thermoplastischen oder selbsthärtenden Bindemitteln, vor allem PUR und
- Verarbeiten mit Mehrkomponentenbindesystemen
verbessert werden.

Die Nachteile der genannten Verfahren liegen zum Teil in komplizierter und teurer Technik, vor allem aber in der notwendigen Verwendung von verschiedenen Kautschukmaterialien, Kunststoffen und Hilfsstoffen, so daß es am Ende zu hohen Materialkosten kommt.

Die in der Patentliteratur beschriebenen Verfahren zur Verwertung von Gummimehl ohne weitere Zusätze arbeiten bei hohen Drücken und hohen Temperaturen, um die Fähigkeit des Altgummis zur begrenzten Nachvulkanisation auszunutzen.

In DE 37 32 987 wird das Verpressen von grob und fein zerkleinerten Altreifen nach Vorwärmen unter Druck zu form- stabilen Produkten (Platten, Pfosten, Bahnen u.ä.) beschrieben.

Die Herstellung von Formkörpern und Folien unter Einwirkung von Temperaturen über 100°C und Druck wird in DE 41 04 435 A1 beschrieben. Nach diesem Verfahren lassen sich vielfältige Materialien mit unterschiedlicher Porosität, Körnung, Struktur und Festigkeit herstellen. Allerdings werden gute mechanische Eigenschaften nicht erreicht. Der Nachteil dieses Verfahrens ist außerdem, daß die gepreßten Formkörper unter hohem Druck auf 40°C abgekühlt werden, bevor sie aus dem Werkzeug entformt werden. Ansonsten erreicht man nur sehr begrenzte Festigkeiten.

Außerdem kommen β-Strahlen (EP 00 23 715) und Ultraschall (US 52 58 413) zur Anwendung.

Das in SU-A-1 183 381 beschriebene Verfahren betrifft eine Vorzerkleinerung von entfasertem Gummi in einer Schlagmühle bei 90-200 m/s bis zu einer Größe von 1-2 mm und einer Temperatur von 80-105°C. Anschließend wird das devulkanisierte Material auf Walzen für 10-30 min. zu 0,1-0,25 m dicken Fellen homogenisiert.

Bereits seit längerem bekannt und z.B. im "Kautschuk-Handbuch", Berliner Union GmbH, Stuttgart, 1960, Band 2, Kapitel 1.18.3, beschrieben ist die Herstellung und Weiterverarbeitung von Regenerat aus Altgummi. Dieses, durch Abbauprozesse bei hohen Temperaturen bereits wieder weitgehend plastische Material wird nach der Depolymerisation verschiedenen mechanischen Behandlungen unterworfen, um, neben der gelegentlichen Zumischung von Zusätzen, ein sehr homogenes, partikelfreies und replastiziertes Material, oft in Form eines hauchdünnen Fells, zu erhalten. Dafür werden auch Walzwerke mit hoher Friktion (Refiner) eingesetzt.

Möglichkeiten, zerkleinerten Altgummi durch gezielte Oberflächen-Replastifizierung (Reclaiming) wieder in den vulkanisationsfähigen Zustand zu versetzen, werden in folgenden Patenten beschrieben:
DE 25 13 146 schlägt die Replastifizierung der Oberflächenschicht von stückigem Altgummi durch kurzzeitiges Erhitzen mittels Gasflamme oder hocherhitzter Gase (bis ca. 900°C) vor, wobei die Gummiteilchen im Kern elastisch bleiben, an der Oberfläche jedoch plastisch und erneut vulkanisierbar werden.
DE 37 19 291 beschreibt ein Verfahren zur Erzeugung eines oberflächlich abgebauten, plastifizierten und damit wieder vulkanisierfähigen Kautschukfilms auf Altgummipartikeln, indem die Zerkleinerung des Altgummis in einer geschlossenen, kontinuierlichen Anlage mit der präzise nach Zeitpunkt, Temperatur und Menge dosierten Zugabe von Abbaumitteln und später Schwefel kombiniert wird, so daß das ausgetragene Produkt erneut vulkanisierbar ist.

Der Nachteil beider Vorschläge besteht in der Notwendigkeit sehr spezieller Anlagen sowie der Erzeugung sehr hoher Temperaturen bzw. der Anwendung zusätzlicher, für den Erfolg des Prozesses notwendiger Chemikalien.

Aufgabe der Erfindung ist es, mittels eines einfachen Verfahrens der vorwiegend mechanischen Behandlung von bereits zerkleinertem Altgummi und zerkleinerten Gummiabfällen das Vulkanisationsvermögen des Altgummis zu steigern und dadurch die Eigenschaften von daraus hergestellten Vulkanisaten zu verbessern sowie die Anwendungsmöglichkeiten solcher Materialien zu erweitern.

Die Aufgabe wird durch die in Anspruch 1 beschriebene Verfahrensweise gelöst. Weitere Ausgestaltungen werden in den Unteransprüchen 2 bis 8 beschrieben.

Die Eigenschaften des bereits zerkleinerten Altgummis, vor allem aus Altreifen in Form von Gummimehl oder Granulat und in Schnitzelform aus Runderneuerungsbetrieben sowie Gummiabfällen aus der Kautschukverarbeitung werden durch mechanische Behandlung unter Ausnutzung verschiedener Effekte verbessert.

Die o.g. Gummimaterialien werden, ohne jegliche Zusätze, rein mechanisch durch mehrfaches Passieren eines engen Spaltes, unter ständiger Einwirkung von Druck und Scherkraft bei einer Materialtemperatur zwischen 0° und 100°C und bei Raumtemperatur ohne zusätzliche äußere Energiezufuhr und unter Anwesenheit von Luftsauerstoff weiter zerkleinert

Vorzugsweise erfolgt die Behandlung auf einem Walzwerk, aber auch der Einsatz eines Kalanders, eines intensiv wirkenden Kneters oder Extruders ist möglich. Bei größeren Teilchengrößen wird zunächst ein breiter Spalt eingestellt, der dann möglichst rasch in Teilschritten sukzessive verkleinert wird. Durch die Rückverformung nach Passieren des engen Spaltes werden auch bei den folgenden Durchläufen die Einwirkung von Druck und Scherkraft auf das zu behandelnde Material gewährleistet.

Der Kauptbehandlungseffekt tritt bei engem Spalt bereits nach wenigen Durchläufen ein. Für höherwertige End- bzw. Zwischenprodukte kann die Anzahl der Durchläufe bis zum Erreichen der gewünschten oder möglichen Eigenschaften bzw. bis zu einem ökonomisch vertretbarem Maß beliebig erhöht werden. Selbstverständlich läßt sich die notwendige Behandlungszeit auch verringern, z.B. durch Erhöhung der Walzenoberflächengeschwindigkeit und der Friktion. Besteht zwischen den Walzen eine bestimmte Friktion, die vorzugsweise im Bereich um 1:1,3 liegt, wird der Behandlungseffekt noch beschleunigt. Durch die hohen Scherkräfte tritt eine Aktivierung der für die Vulkanisation maßgebenden Bestandteile in den (zum Teil neugebildeten) Oberflächen der sich in sehr engem Kontakt zueinander befindlichen Gummiteilchen ein.

Bei Anwendung der erfindungsgemäßen Behandlung auf reinen Altgummi und Gummiabfälle ohne weitere Zusätze werden nachfolgend Produkte vulkanisiert, die ausschließlich aus Altgummi bestehen und deren Eigenschaften, insbesondere deren Zugfestigkeit und Reißdehnung, durch kein bisher bekanntes Verfahren erreicht werden, das ebenfalls ohne Zusätze arbeitet. Um den Zwischen- bzw. Endprodukten gezielt bestimmte Eigenschaften zu verleihen, können vor oder während der erfindungsgemäßen Behandlung zusätzlich Mischungen an Kautschukchemikalien, wie Vulkanisationsmitteln, Füll- und Hilfsstoffen usw., zugegeben werden.

Selbstverständlich können die erfindungsgemäß behandelten Zwischen- bzw. Endprodukte auch in größeren Mengen zu einer neuen Kautschukmischung oder zu geeigneten Kunststoffen zugegeben werden.

Es ist möglich, das so behandelte Ausgangsmaterial, welches im Falle der Anwendung eines Walzwerkes oft in Form eines "Walzenfells" vorliegt, in dieser Form als Bahnen, Streifen oder Stücken direkt einzusetzen, bzw. weiteren Verarbeitungsprozessen zur Herstellung von Formkörpern, Platten, Folien, Bahnen, Profilen usw. zuzuführen.

Die Vorteile dieses Verfahrens bestehen u.a. darin, daß man durch einfache Behandlung, z.B. auf einem Walzwerk, die Eigenschaften des zerkleinerten Altgummis und daraus hergestellter Vulkanisate je nach Anwendungszweck erheblich verbessern kann. Dieser Verbesserungseffekt tritt unabhängig von der Zusammensetzung, der Teilchengröße und -form, der Herkunft und der Zerkleinerungsmethode der Altgummimischung ein. Insbesondere können kostenintensive Kautschukchemikalien bei vielen Anwendungen teilweise oder ganz eingespart werden. Durch die erfindungsgemäße Behandlung bei Temperaturen, die keine Heizung erfordern, wird der Energieeinsatz minimiert.

Die Erfindung wird nachfolgend anhand von 5 Ausführungsbeispielen näher erläutert, wobei generell festgestellt werden kann, daß der durch die erfindungsgemäße Behandlung erreichte Effekt insbesondere am Anfang des Prozesses besonders hoch ist und oftmals bereits nach weniger als 5 min weit mehr als die Hälfte des bei 7 min Walzzeit zu beobachtenden Effektes ausmacht. Außerdem zeigte ein Vergleich von ohne jeden Zusatz gewalztem Gummimehl, Probe A, mit ungewalztem Gummimehl der gleichen Charge, dem jedoch eine Standard-Vulkanisationsmischung und Vestenamer® zugemischt wurden, Probe B, nach Vulkanisation unter identischen Werten für Druck, Temperatur und Zeit eine nahezu gleich große Zugfestigkeit des lediglich 2 min gewalzten Materials (A) und des herkömmlich mit Vestenamer ® vulkanisierten Materials (B). Die Zugfestigkeit stieg nach 7 min Walzzeit für Probe A sogar auf das Doppelte gegenüber Probe B. Die Reißdehnung für Probe A erreicht nach 2 min Walzen etwa den vierfachen, nach 7 min Walzen den achtfachen Wert der Reißdehnung von Probe B.

### Beispiel 1

Als Ausgangsmaterial wird gemahlenes Gummimehl aus Altreifen mit einer Korngröße < 1,0 mm ohne Zusätze verwendet. Das Walzen erfolgt bei Raumtemperatur auf dem Walzwerk Polymix 110 U der Fa. Schwabenthan, Berlin, bei einer Drehzahl von 40 U/min, einer Friktion von 1:1,2 und einem engsten Walzenspalt von 0,1 mm. Es beginnt sich schon nach wenigen Durchläufe ein Walzenfell zu bilden, welches nach 30 bis 40 Durchläufen (ca. 3 Minuten) schon zusammenhängend ausgebildet ist. Nach 100 Durchläufen (ca. 7 Minuten) wird das Walzen beendet. Das so reaktivierte Material wird in ein auf 160°C vorgeheiztes Plattenwerkzeug gegeben, welches in einer Presse Polystat 200 T der Fa. Schwabenthan, Berlin, bei 160°C/10 min/200 bar zu ca. 2 mm dicken Platten verpreßt wird.

Aus diesen Platten wurden nach DIN 53 504 Normstäbe S 2 gestanzt, im Zugversuch geprüft und mit der unter gleichen Bedingungen gepreßten Probe aus dem gleichen, aber unbehandelten Gummimehl verglichen.

**Tabelle 1**

| | | nicht reaktiviert | reaktiviert |
|---|---|---|---|
| Walzzeit | min | 0 | ca. 7 |
| Zahl der Durchläufe | ca. | 0 | 100 |
| Zugfestigkeit | Mpa | 0,7 | 4,7 |
| Reißdehnung | % | 47 | 200 |
| Härte | Sh A | 69 | 59 |

### Beispiel 2

Als Ausgangsmaterial wird Gummigranulat aus Altreifen einer Teilchengröße zwischen 2 und 10 mm ohne Zusätze verwendet. Beim Walzen auf dem Walzwerk wird zunächst der Walzenspalt auf 2 mm eingestellt, damit die groben Gummiteilchen besser erfaßt werden. Nach einigen Durchläufen wird dann der Walzenspalt schrittweise immer enger gestellt, bis nach 25 Durchläufen (ca. 1,5 min) der engste Walzenspalt von 0,1 mm erreicht ist.

Dann wird das Material auf die gleiche Art und Weise wie in Beispiel 1 dargestellt behandelt, Platten gepreßt und Normstäbe S 2 geprüft.

Es ergeben sich folgende Kennwerte nach Tabelle 2:

**Tabelle 2**

| | | nicht reaktiviert | reaktiviert |
|---|---|---|---|
| Walzzeit | min | 0 | ca. 7 |
| Zahl der Durchläufe | ca. | 0 | 100 |
| Zugfestigkeit | Mpa | - | 3,3 |
| Reißdehnung | % | - | 168 |
| Härte | Sh A | - | 58 |

Die Probe aus nicht reaktiviertem Gummimehl ist wegen ungenügender Festigkeit nicht prüfbar.

### Beispiel 3

Als Ausgangsmaterial wird gemahlenes Gummimehl der Korngröße < 1 mm mit üblichen Vulkanisationsmitteln verwendet, dem nach ca. 2/3 der Gesamtwalzzeit 3 Teile Vestenamer® 8012 der Fa. Hüls AG bei 80°C als Haftvermittler zugegeben werden. Für die nicht reaktivierte Probe werden sämtliche Bestandteile im Labormischer M3 der Fa. MTI-Mischtechnik Detmold bei 3500 U/min 10 Minuten lang gemischt. Beide Mischungen werden auf die gleiche Art und Weise wie in Beispiel 1 gepreßt und geprüft. Nach Tabelle 3 ergeben sich folgende Kennwerte:

**Tabelle 3**

| | | nicht reaktiviert | reaktiviert |
|---|---|---|---|
| Walzzeit | min | 0 | ca. 7 |
| Zahl der Durchläufe | ca. | 0 | 100 |
| Zugfestigkeit | Mpa | 4,6 | 8,2 |
| Reißdehnung | % | 109 | 141 |
| Härte | Sh A | 70 | 70 |

### Beispiel 4 Um den Reaktivierungseffekt zu verstärken und damit die Be

handlungszeit zu verkürzen, wurde folgendes durchgeführt: Als Ausgangsmaterial wird gemahlenes Gummigranulat der Korngröße < 1 mm ohne Zusätze verwendet. Das Walzen erfolgt wie bei den o. g. Beispielen bei Raumtemperatur auf dem Walzwerk Polymix 110 U der Fa. Schwabenthan, Berlin, jedoch mit höherer Drehzahl von 50 U/min (Umfangsgeschwindigkeit 17,27 m/min), sowie höherer Friktion von 1:1,5 und bei engem Walzenspalt. Nach 100 Durchläufen (ca. 7 Minuten) bildet sich ein stabiles Gummifell, woraus eine Platte zur Prüfung wie im Beispiel 1 verpreßt wird. Nach DIN 53 504 geprüfte Normstäbe S2 von dieser Probe besitzen eine mittlere Zugfestigkeit von 5,4 MPa und eine mittlere Reißdehnung von 205 %. Tabelle 4 zeigt den Verleich mit einer analogen Probe des unbehandelten gleichen Materials.

**Tabelle 4**

| | | nicht reaktiviert | reaktiviert |
|---|---|---|---|
| Walzzeit | min | 0 | ca. 7 |
| Zahl der Durchläufe | ca. | 0 | 100 |
| Zugfestigkeit | Mpa | 0,7 | 5,4 |
| Reißdehnung | % | 47 | 205 |
| Härte | Sh A | 69 | 58 |

### Beispiel 5

Ausgangsmaterial ist vulkanisierter Abfall aus einem Spritzpreßverfahren eines Gummiwerkes. Beim Walzen auf dem Walzwerk wird zunächst der Walzenspalt auf 1 mm eingestellt, damit eine Vorzerkleinerung dieses kompakten Abfalls erfolgen kann. Danach verläuft die Reaktivierung wie in den anderen Beispielen dargestellt. Das nach 100 Durchläufen (ca 7 Minuten Walzzeit) entstehende Gummifell wurde auf die gleiche Art und Weise wie in Beispiel 1 gepreßt und geprüft. Es werden gute mechanische Eigenschaften erreicht. Die Zugfestigkeit beträgt 8 Mpa, die Reißdehnung liegt bei 300 % und die Härte bei 51 Shore A.

## Patentansprüche

1. Verfahren zur Reaktivierung von Altgummiteilchen oder zerkleinerten Gummiabfällen, bei dem bereits zerkleinertes Ausgangsmaterial durch mehrfaches Passieren eines engen Spaltes unter wiederholter Einwirkung von Druck und Scherkraft bei einer Materialtemperatur zwischen 0 und 100°C und bei Raumtemperatur ohne zusätzliche äußere Energiezufuhr und unter Anwesenheit von Luftsauerstoff bei weiterer Zerkleinerung bis zu einer Aktivierung der für die Vulkanisation maßgebenden Bestandteile in den Oberflächen der Gummiteilchen zu einem wieder vulkanisierfähigen Gummimaterial modifiziert wird.

2. Verfahren nach Anspruch 1, dadurch gekennzeichnet, daß beim wiederholten Passieren des engen Spaltes zur Aufrechterhaltung des notwendigen Druckes und der notwendigen Scherkraft der Spalt sukzessive verringert wird.

3. Verfahren nach den Ansprüchen 1 bis 2, dadurch gekennzeichnet, daß das Passieren des engen Spaltes mit einer Friktion bis zu 1:2, vorzugsweise bis zu 1:1,3, erfolgt.

4. Verfahren nach den Ansprüchen 1 bis 3, dadurch gekennzeichnet, daß als Ausgangsmaterial zerkleinertes Altgummigranulat aus gebrauchten Gummierzeugnissen, wie Altreifen und gebrauchte technische Artikel, die aus Mischungen aller bekannten Kautschukarten wie NR, IR, IIR, SBR, BR, NBR, QM, EPDM, PUR bestehen, sowie zerkleinerte Gummiabfälle der Gummiindustrie eingesetzt werden, deren Teilchengröße bereits bis auf < 10 mm, vorzugsweise bis auf 1 mm, reduziert wurde.

5. Verfahren nach den Ansprüchen 1 bis 4, dadurch gekennzeichnet, daß während oder nach der Reaktivierung Weichmacher, wie Fettsäuren, tierische Leime, Harze oder Mineralöle, und andere Hilfsmittel und Füllstoffe zugegeben werden.

6. Verfahren nach den Ansprüchen 1 bis 5, dadurch gekennzeichnet, daß vor oder während der Reaktivierung Vulkanisationsmittel ohne Bindemittel/Haftvermittler zugegeben werden.

7. Verfahren nach den Ansprüchen 1 bis 4, dadurch gekennzeichnet, daß vor oder während der Reaktivierung Bindemittel/Haftvermittler und Vulkanisationsmittel zugegeben werden.

8. Verfahren nach den Ansprüchen 1 bis 4, dadurch gekennzeichnet, daß im Verlaufe des Reaktivierungsvorganges oder danach Frischkautschuk unter Zusatz von üblichen Vulkanisationschemikalien oder fertige Frischkautschukmischungen in unterschiedlichen Verhältnissen zugemischt werden.

## Claims

1. A procedure for reactivating reclaimed rubber particles or comminuted rubber waste, in which already comminuted starting material is modified into a revulcanizable rubber material by repeatedly passing a narrow gap during repeated exposure to pressure and shearing forces at a material temperature of 0 and 100°C, and at room temperature without any additional outside energy supply, and in the presence of atmospheric oxygen during continued comminution to a point where constituents in the surfaces of the rubber particles important for vulcanization are activated.

2. A procedure according to claim 1, characterized by the fact that the gap is successively diminished during repeated passing of the narrow gap to maintain the necessary pressure and shearing force.

3. A procedure according to claims 1 to 2, characterized by the fact that the narrow gap is passed with a friction of up to 1:2, preferably up to 1:1.3.

4. A procedure according to one of claims 1 to 3, characterized by the fact that the starting material consists of comminuted reclaimed rubber pellets made out of used rubber products, like old tires and used technical articles comprised of mixtures of all known types of rubber, e.g., NR, IR IIR, SBR, BR, NBR, QM, EPDM and PUR, along with comminuted rubber waste from the rubber industry whose particle size has already been reduced to <10 mm, preferably to 1 mm.

5. A procedure according to claims 1 to 4, characterized by the fact that softeners, e.g., fatty acids, animal glues, resins or mineral oils, along with other aids and fillers are added during or after reactivation.

6. A procedure according to claims 1 to 5, characterized by the fact that vulcanization agents without binders/bonding agents are added before or during reactivation.

7. A procedure according to claims 1 to 4, characterized by the fact that binders/bonding agents and vulcanization agents are added before or during reactivation.

8. A procedure according to claims 1 to 4, characterized by the fact that fresh rubber along with conventional vulcanization chemicals or finished fresh rubber mixtures are added in varying ratios during or after the reactivation procedure.

## Revendications

1. Procédé de réactivation de particules de caoutchouc usagé ou de déchets de caoutchouc broyés, suivant lequel un matériau de départ déjà broyé est modifié pour former un matériau de caoutchouc revulcanisable par de multiples passages au travers d'une fente étroite sous l'action répétée de la pression et de la force de cisaillement, à une température du matériau comprise entre 0 et 100 °C et à température ambiante, sans apport d' énergie extérieure supplémentaire et en présence d'oxygène atmosphérique, tout en poursuivant le broyage jusqu'à une activation des constituants importants pour la vulcanisation qui se trouvent dans les surfaces des particules de caoutchouc.

2. Procédé selon la revendication 1, caractérisé en ce que la fente est réduite progressivement lors du passage répété au travers de cette fente étroite, en vue du maintien de la pression et de la force de cisaillement nécessaires.

3. Procédé selon les revendications 1 à 2, caractérisé en ce que le passage de la fente étroite se fait avec une friction pouvant atteindre 1:2, de préférence pouvant atteindre 1:1,3.

4. Procédé selon les revendications 1 à 3, caractérisé en ce que comme matériau de départ, on utilise des granules de caoutchouc de récupération broyées venant de produits de caoutchouc usagés tels que vieux pneus et articles techniques usagés se composant de mélanges à base de toutes sortes de caoutchouc connues telles que NR, IR, IIR, SBR, BR, NBR, QM, EPDM, PUR, ainsi que des déchets de caoutchouc broyés issus de l'industrie du caoutchouc, dont la grosseur des particules a déjà été réduite à < 10 mm, de préférence jusqu'à 1 mm.

5. Procédé selon les revendications 1 à 4, caractérisé en ce que pendant ou après la réactivation, on ajoute des plastifiants tels qu'acides gras, des colles animales, des résines ou des huiles minérales, et d'autres adjuvants et charges.

6. Procédé selon les revendications 1 à 5, caractérisé en ce qu'avant ou pendant la réactivation, on ajoute des agents de vulcanisation sans agglomérants/agents adhésifs.

7. Procédé selon les revendications 1 à 4, caractérisé en ce qu'avant ou pendant la réactivation, on ajoute des agglomérants/agents adhésifs et des agents de vulcanisation.

8. Procédé selon les revendications 1 à 4, caractérisé en ce qu'au cours de l'opération de réactivation ou après, on ajoute du caoutchouc frais sous adjonction d'agents de vulcanisation chimiques ou de mélanges de caoutchouc frais préparés, en différentes proportions.
